(19) Europäisches Patentamt / European Patent Office / Office européen des brevets

(11) **EP 3 081 742 B1**

(12) **EUROPEAN PATENT SPECIFICATION**

(45) Date of publication and mention
of the grant of the patent:
**19.08.2020 Bulletin 2020/34**

(51) Int Cl.:
**F01C 21/02** *(2006.01)*    **F04C 18/02** *(2006.01)*
**F16C 35/073** *(2006.01)*    **F16C 19/46** *(2006.01)*

(21) Application number: **16162839.1**

(22) Date of filing: **30.03.2016**

(54) **COMPRESSOR**

VERDICHTER

COMPRESSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.04.2015 JP 2015080800**

(43) Date of publication of application:
**19.10.2016 Bulletin 2016/42**

(73) Proprietor: **MITSUBISHI HEAVY INDUSTRIES
THERMAL SYSTEMS, LTD.
Tokyo 108-8215 (JP)**

(72) Inventors:
• **Mizuno, Hisao**
  **Tokyo, 108-8215 (JP)**
• **Ito, Takahide**
  **Tokyo, 108-8215 (JP)**
• **Noguchi, Akihiro**
  **Aichi, 453-0862 (JP)**
• **Goto, Takashi**
  **Aichi, 453-0862 (JP)**
• **Shikanai, Toshiyuki**
  **Aichi, 453-0862 (JP)**
• **Goto, Syusaku**
  **Aichi, 453-0862 (JP)**

(74) Representative: **Henkel & Partner mbB
Patentanwaltskanzlei, Rechtsanwaltskanzlei
Maximiliansplatz 21
80333 München (DE)**

(56) References cited:
JP-A- 2010 236 489        US-A- 3 129 038
US-A1- 2007 144 466        US-A1- 2010 080 722

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

{Technical Field}

The present invention relates to a compressor such as an open scroll compressor suitable for use in a vehicle air-conditioning device.

{Background Art}

As described in JP 2010-236489A (on which the preamble portion of claim 1 is based), JP 2003-232288A and JP S60-183201A, an open scroll compressor has been known, which is configured such that a drive shaft protrudes to the outside of a housing. The open scroll compressor of this type includes, in order to rotatably support the drive shaft, a main bearing and a sub-bearing provided at an end portion of the drive shaft.

Under assumption of use in an oilless state, a grease-lubricated ball bearing is mainly employed as the sub-bearing.

US 2010/0080722A1 discloses a scroll compressor which uses a needle bearing as a sub-bearing in combination with a ball bearing for supporting a rotating shaft.

{Summary of Invention}

{Technical Problem}

However, in order to deal with an overload, a bearing dynamic load rating needs to be increased. This brings a disadvantage that it is inevitable that the size of the grease-lubricated ball bearing becomes larger.

In order to increase the bearing dynamic load rating without enlargement of the size of the sub-bearing, a needle bearing may be employed as the sub-bearing. However, in the structure of rolling needles of the needle bearing directly on the drive shaft, the position where a bearing load acts on the drive shaft is fixed due to such a structure, and therefore, there is a disadvantage that lowering of proof stress is caused by flaking of a drive shaft surface due to a repeated load. The "flaking" described herein is a phenomenon that a rolling surface receives a repeated contact load due to rotation of a bearing, and for this reason, fish-scale-shaped flakes are caused due to wear-out of the surface. In order to prevent the flaking, a hardened layer needs to be formed on the shaft surface by, e.g., carburized quenching. This leads to a cost increase.

The present invention has been made in view of such a situation, and is intended to provide a compressor for which flaking can be prevented without a cost increase even if a needle bearing is employed as a sub-bearing.

{Solution to Problem}

In order to solve the above-described problem, the compressor of the present invention has the features of claim 1.

That is, the compressor of the present invention includes a drive shaft rotatable about an axis, a compression mechanism arranged to be driven by the drive shaft to compress a fluid, a main bearing configured to rotatably support the drive shaft on a housing, and a sub-bearing rotatably supporting the drive shaft on the housing on an end side of the drive shaft with respect to the main bearing; and the sub-bearing is configured as a needle bearing and includes a plurality of needles ; and a cylindrical ring is provided such that the needles are rolling at an outer peripheral surface of the cylindrical ring, and such that it is clearance-fitted, at an inner peripheral surface of the cylindrical ring, to an outer portion of the drive shaft to rotate together with the drive shaft.

Since the cylindrical ring (a floating bush) is clearance-fitted to the outer portion of the drive shaft, the clearance formed by such clearance fitting can change the position of a load on the drive shaft, and as a result, flaking of the surface of the drive shaft can be prevented. Thus, hardening performed for the surface of the drive shaft can be skipped, leading to cost reduction.

Moreover, the clearance formed by the clearance fitting allows inclination of the drive shaft, and as a result, edge loading due to uneven contact with the needle bearing (the sub-bearing) can be avoided. This can increase the life of the sub-bearing.

Further, in the case of applying selective fitting for constant rolling between each needle of the needle bearing and the outer portion of the drive shaft without providing the cylindrical ring, the outer diameter of the drive shaft needs to be strictly adjusted, and therefore, it is hard to control such an outer diameter. On the other hand, in the present invention, it is sufficient to apply selective fitting for constant rolling between each needle of the sub-bearing as the needle bearing and the outer portion of the cylindrical ring. Since clearance fitting is applied between an inner portion of the cylindrical ring and the outer portion of the drive shaft, no strict control of the outer diameter of the drive shaft is required.

In the compressor of the present invention, the clearance formed by the above-described clearance fitting is set such that when the drive shaft inclines to the maximum extent with respect to the axis, the drive shaft contacts an inner peripheral edge portion of one end of the cylindrical ring and does not contact an inner peripheral edge portion of the other end of the cylindrical ring.

When the clearance formed by the clearance fitting is small, if the drive shaft inclines with respect to the axis, the drive shaft contacts the inner peripheral edge portion of one end of the cylindrical ring, and also contacts the inner peripheral edge portion of the other end of the cylindrical ring. As a result, the cylindrical ring and the drive shaft together incline with respect to the axis. Consequently, uneven contact between the sub-bearing and the cylindrical ring is caused, leading to edge loading at the sub-bearing.

On the other hand, in the present invention, when the drive shaft inclines to the maximum extent with respect to the axis, the clearance is formed between the inner portion of the cylindrical ring and the outer portion of the drive shaft such that the drive shaft contacts the inner peripheral edge portion of one end of the cylindrical ring and does not contact the inner peripheral edge portion of the other end of the cylindrical ring. Thus, the cylindrical ring and the drive shaft do not incline together, and the entirety of the cylindrical ring in the axial direction contacts the sub-bearing. As a result, edge loading can be reduced.

Note that the clearance formed "when the drive shaft inclines to the maximum extent with respect to the axis" can be formed when the drive shaft inclines in attachment thereof, for example.

Such a clearance is equal to or greater than 10/1000 of the outer diameter of the drive shaft and equal to or less than 30/1000 of the outer diameter of the drive shaft, for example.

The compressor of the present invention further includes a contact member attached to the drive shaft and constantly contacting an end surface of the cylindrical ring to determine the position of the cylindrical ring in the axial direction.

The contact member is attached to the drive shaft, and the position of the cylindrical ring in the axial direction is determined by the contact member. Since the contact member constantly contacts the end surface of the cylindrical ring, fretting due to intermittent contact between the contact member and the end surface of the cylindrical ring can be prevented.

In the compressor of the present invention, the contact member presses the cylindrical ring not to interfere with relative rotation of the cylindrical ring to the drive shaft.

Relative rotation of the cylindrical ring to the drive shaft can be allowed, and therefore, the position of the load on the drive shaft can be changed. This can prevent flaking of the surface of the drive shaft.

In the compressor of the present invention, the contact member has an arc-shaped inner peripheral portion, and is attached to the drive shaft in such a manner that the inner peripheral portion is housed in a recessed groove formed in the circumferential direction of the drive shaft.

The contact member has the arc-shaped inner peripheral portion. It can be ensured that the contact member is attached to the drive shaft in such a manner that the inner peripheral portion is housed in the recessed groove of the drive shaft.

Since the recessed groove housing the inner peripheral portion of the contact member forms a portion having a smaller diameter than the outer diameter of the drive shaft, the recessed groove can be used as a buffer portion of a sharpening stone used for polishing of the outer portion of the drive shaft.

Note that the contact member is a C-shaped plate member (a so-called "C-type retaining ring"), for example.

{Advantageous Effects of Invention}

The cylindrical ring rolling, at the outer peripheral surface thereof, on the needles of the needle bearing is provided, and clearance fitting is applied between the inner portion of the cylindrical ring and the outer portion of the drive shaft. Thus, the position of the load on the drive shaft can be changed, and therefore, flaking of the surface of the drive shaft can be prevented. Thus, hardening performed for the surface of the drive shaft can be skipped, leading to cost reduction.

{Brief Description of Drawings}

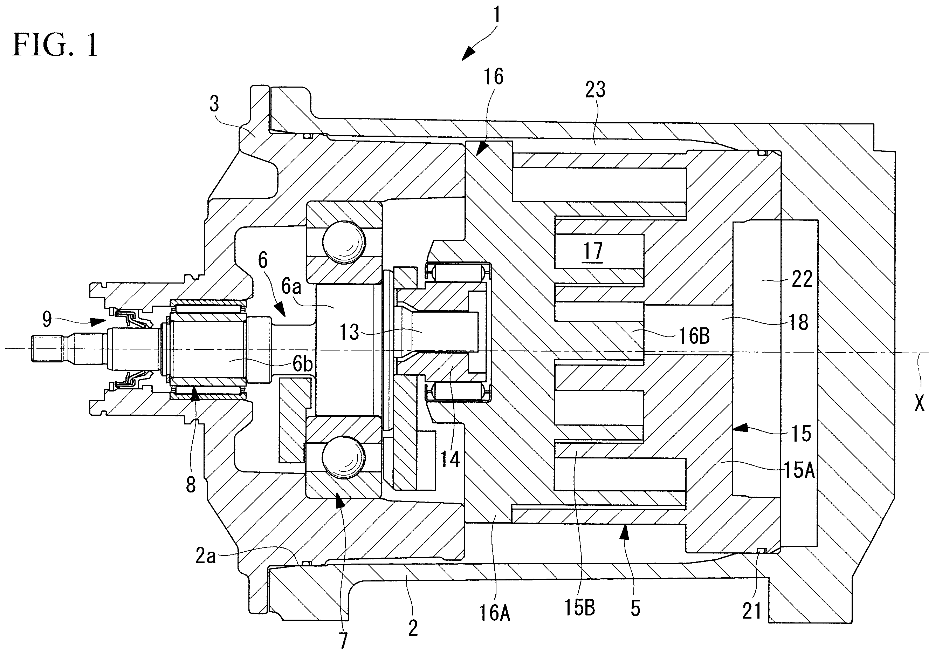

{Fig. 1}
Fig. 1 is a longitudinal sectional view of an open scroll compressor of an embodiment of the present invention.
{Fig. 2}
Fig. 2 is a perspective view of a sub-bearing as part of Fig. 1.
{Fig. 3}
Fig. 3 is an enlarged partial longitudinal sectional view of the periphery of the sub-bearing of Fig. 1.
{Fig. 4}
Fig. 4 is a longitudinal sectional view of a clearance between a drive shaft and a floating bush.
{Fig. 5}
Fig. 5 is a longitudinal sectional view of a comparative example of the clearance between the drive shaft and the floating bush.
{Fig. 6}
Fig. 6 is a side view of the state in which a recessed groove formed at the drive shaft serves as a buffer portion in polishing.

{Description of Embodiments}

An embodiment of the present invention will be described below with reference to Figs. 1 to 6.

An open scroll compressor (a compressor) 1 of the present embodiment is used as a compressor configured to compress refrigerant in a vehicle air-conditioning device.

The open scroll compressor 1 includes, as illustrated in Fig. 1, a cylindrical rear housing 2 about an axis X as a center axis, and a front housing 3 provided on a front end side (the left side as viewed in Fig. 1) of the rear housing 2. The front housing 3 is attached to close an opening 2a of the rear housing 2.

The rear housing 2 is in such a shape that a rear end side is closed, and the front housing 3 is fixed to the opening 2a on the front end side with bolts (not shown). In the state in which the front housing 3 is fixed to the rear housing 2, an enclosed space is formed inside the rear housing 2 and the front housing 3. A scroll compression mechanism (a compression mechanism) 5 and a drive shaft 6 are housed in the enclosed space.

An outer peripheral surface of the rear housing 2 is formed with a suction port (not shown) through which a refrigerant gas (fluid) flows into the enclosed space and a discharge port (not shown) through which refrigerant gas compressed by the scroll compression mechanism 5 is discharged from the enclosed space to the outside.

The drive shaft 6 is supported to rotate about the axis X on the front housing 3 through a main bearing 7 and a sub-bearing 8. A front end side (the left end side as viewed in Fig. 1) of the drive shaft 6 protrudes from the front housing 3 to the outside through a lip seal 9. At such a protrusion, a not-shown electromagnetic clutch, a not-shown pulley, etc. are provided to receive power as in a well-known technique. Power is transmitted from a drive source such as an engine to the protrusion through a V-belt. As described above, the scroll compressor 1 of the present embodiment is the open type because one end of the drive shaft 6 protrudes from the housing (the front housing 3) to the outside.

The lip seal 9 is a mechanical seal including an elastic portion contacting an outer peripheral surface of the drive shaft 6 and configured to prevent fluid leakage along the drive shaft 6. The lip seal 9 is disposed on the front end side (the left end side as viewed in Fig. 1) with respect to the sub-bearing 8, and is attached to an inner peripheral surface of the front housing 3 such that the center axis thereof is coincident with the axis X.

A crank pin 13 is provided integrally with a rear end (the right end as viewed in Fig. 1) of the drive shaft 6, and is provided eccentrically with respect to the axis X by a predetermined dimension. Moreover, the rear end of the drive shaft 6 is coupled to a later-described orbiting scroll 16 of the scroll compression mechanism 5 through a well-known radial compliance mechanism 14 including a drive bush whose orbiting radius is variable.

The scroll compression mechanism 5 is driven by the drive shaft 6, and is configured to compress refrigerant gas flowing through the suction port to discharge the compressed refrigerant gas to the outside through the discharge port formed at the rear housing 2.

In the scroll compression mechanism 5, a pair of a fixed scroll 15 and the orbiting scroll 16 engages with each other with the phases thereof being shifted by 180°, and therefore, form a pair of compression chambers 17 between the scrolls 15, 16. The scroll compression mechanism 5 compresses refrigerant gas in such a manner that the compression chambers 17 move from an outer peripheral position to a center position to gradually decrease the volumes thereof.

The fixed scroll 15 includes a discharge port 18 through which compressed refrigerant gas is discharged to a center portion, and is fixed to a bottom wall surface of the rear housing 2 through bolts (not shown). Moreover, the orbiting scroll 16 is coupled to the crank pin 13 of the drive shaft 6 through the radial compliance mechanism 14, and is supported by a thrust bearing surface of the front housing 3 through a well-known anti-rotation mechanism (not shown) so that the orbiting scroll 16 can be freely orbitably driven.

An O-ring 21 is provided at the outer periphery of an end plate 15A of the fixed scroll 15. The O-ring 21 closely contacts an inner peripheral surface of the rear housing 2 to divide the internal space of the rear housing 2 into a discharge chamber 22 and a suction chamber 23.

The discharge chamber 22 communicates with the discharge port 18 such that refrigerant gas is discharged from the compression chambers 17. The refrigerant gas discharged through the discharge port 18 is discharged toward a refrigeration cycle side through the discharge port formed at the rear housing 2.

The suction chamber 23 formed between the scroll compression mechanism 5 and the rear housing 2 communicates with the suction port formed at the rear housing 2. Thus, low-pressure refrigerant gas having circulated in a refrigeration cycle is sucked through the suction port, and then, is sucked into the compression chambers 17 through the suction chamber 23.

The pair of fixed and orbiting scrolls 15, 16 is each configured such that a corresponding one of spiral wraps 15B, 16B stands on a corresponding one of the end plates 15A, 16A. The pair of compression chambers 17 divided by the end plates 15A, 16A and the spiral wraps 15B, 16B are formed between the scrolls 15, 16 to be symmetrical with respect to the scroll center. Moreover, the orbiting scroll 16 is smoothly rotatably and orbitably driven about the fixed scroll 15.

As illustrated in Fig. 1, the height of the compression chamber 17 in the axial direction thereof is greater on the outer peripheral side of the spiral wrap 15B, 16B than on the inner peripheral side of the spiral wrap 15B, 16B. This forms the scroll compression mechanism 5 capable of performing three-dimensional compression in which refrigerant gas is compressed in both of the circumferential and height directions of the spiral wraps 15B, 16B while the compression chambers 17 are moving from the outer peripheral side to the center to decrease the volumes thereof and to compress the refrigerant gas.

The main bearing 7 supports the drive shaft 6 on the front housing 3 such that the drive shaft 6 is rotatable about the axis X. The main bearing 7 is a ball bearing. An inner ring of the main bearing 7 is press-fitted and fixed to a large-diameter portion 6a of the drive shaft 6, and an outer ring of the main bearing 7 is press-fitted and fixed to an end portion of the front housing 3 close to the scroll compression mechanism 5. The main bearing 7 is disposed closer to the scroll compression mechanism 5 with respect to the sub-bearing 8, and has a larger diameter than that of the sub-bearing 8.

The sub-bearing 8 supports, together with the main bearing 7, the drive shaft 6 on the front housing 3 such that the drive shaft 6 is rotatable about the axis X. The sub-bearing 8 is disposed on the front side (the left end side as viewed in Fig. 1) with respect to the main bearing 7, and is disposed closer to the scroll compression mechanism 5 with respect to the lip seal 9.

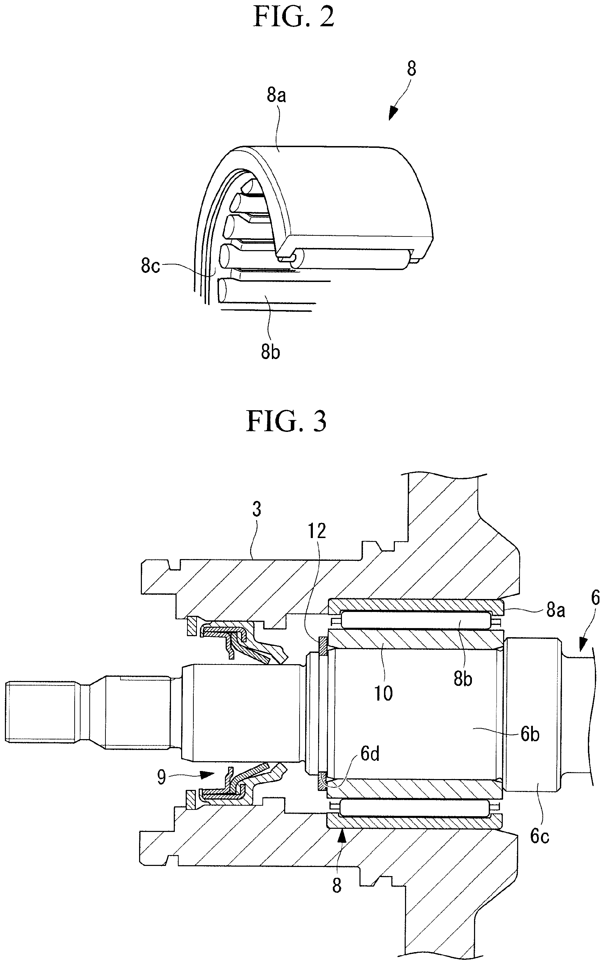

As illustrated in Fig. 2, the sub-bearing 8 is a needle bearing. The sub-bearing 8 includes an outer ring 8a, a plurality of needles 8b (rolling bodies) arranged on the inner peripheral side of the outer ring 8a, and a holder 8c configured to hold the needles 8b. Each needle 8b is a shaft-shaped member extending along the axis X.

As illustrated in Fig. 3, the outer ring 8a is press-fitted and fixed to the front housing 3. A cylindrical floating bush (a cylindrical ring) 10 is disposed on the inner peripheral side of the needles 8b. That is, the floating bush 10 is provided between the sub-bearing 8 and a small-diameter portion 6b of the drive shaft 6. The small-diameter portion 6b indicates a portion having a smaller diameter than that of the large-diameter portion 6a attached to the main bearing 7.

An outer peripheral surface of the floating bush 10 is attached to roll on the needles 8b. Specifically, selective fitting is applied such that the floating bush 10 is clearance-fitted to the inner peripheral rolling surface formed by the needles 8b. Considering, e.g., a temperature in actual operation and shaft stiffness, a clearance in attachment of the floating bush 10 onto the needles 8b is set such that the clearance becomes zero in the actual operation and that the outer peripheral surface of the floating bush 10 is in line contact with the needles 8b in the actual operation.

On the other hand, an inner peripheral surface of the floating bush 10 is clearance-fitted to an outer portion of the small-diameter portion 6b of the drive shaft 6. Such clearance fitting is set such that predetermined clearance fitting is applied in the actual operation. Thus, the drive shaft 6 and the floating bush 10 basically rotate together, but can displace from each other in the circumferential direction when the force exceeding the friction force determined by the coefficient of static friction between the inner peripheral surface of the floating bush 10 and the outer peripheral surface of the drive shaft 6 is applied. This changes the position of a load on the drive shaft 6.

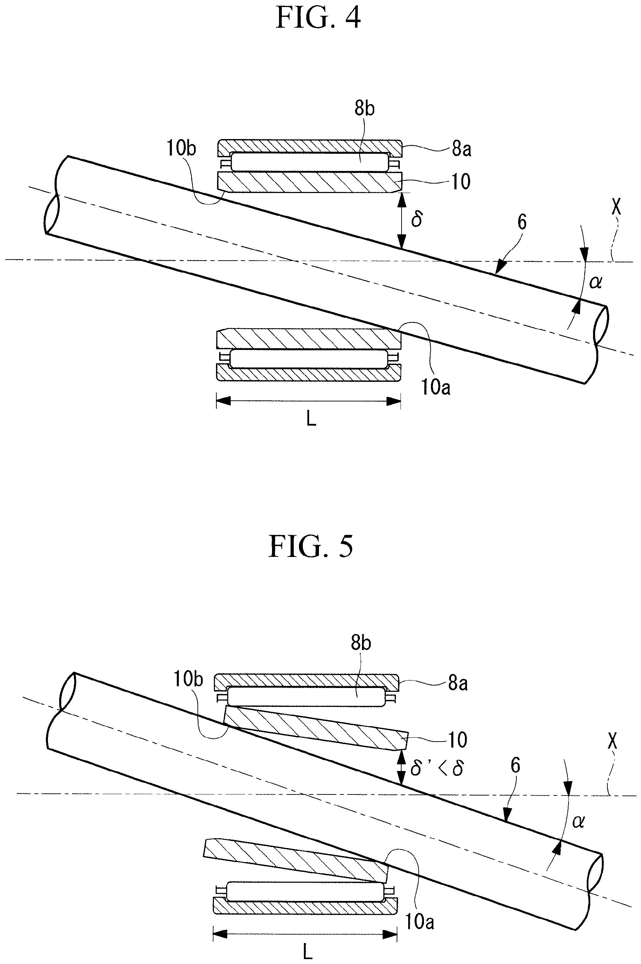

Fig. 4 illustrates the method for setting the clearance between the floating bush 10 and the drive shaft 6. Note that for the sake of easy understanding, inclination of the drive shaft 6 is illustrated exaggerated in Fig. 4.

In attachment of the scroll compressor 1, the drive shaft 6 is inclined to the maximum extent with respect to the axis X on purpose, as illustrated in Fig. 4. In this state, a clearance δ is set at such dimensions that the drive shaft 6 contacts an inner peripheral edge portion of one end 10a of the floating bush 10 and does not contact an inner peripheral edge portion of the other end 10b of the floating bush 10. That is, the clearance δ is set such that the following expression (1) is satisfied:

$$\delta > L \times \alpha \quad \ldots (1)$$

where the dimension of the floating bush 10 in the axial direction is "L," and inclination of the drive shaft 6 is "α." Specifically, the clearance δ is equal to or greater than 10/1000 of the outer diameter of the drive shaft and equal to or less than 30/1000 of the outer diameter of the drive shaft.

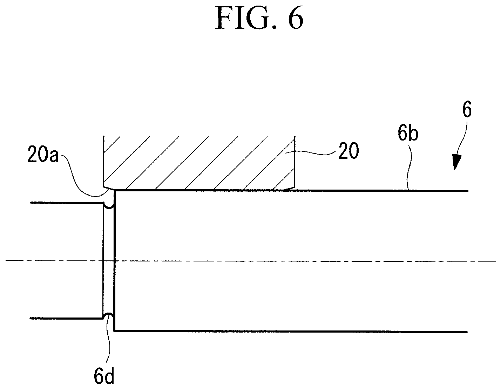

As illustrated in Fig. 3, the position of the floating bush 10 in the axis-X direction is determined in the state in which one end (the right end as viewed in Fig. 3) of the floating bush 10 contacts a step portion formed by an intermediate-diameter portion 6c of the drive shaft 6 and the other end (the left end as viewed in Fig. 3) of the floating bush 10 contacts a retaining ring (a contact member) 12. The retaining ring 12 is in such a C-shape that part of a ring shape is cut out, and an arc-shaped inner peripheral portion of the retaining ring 12 is attached to a recessed groove 6d (see Fig. 6 for more details) formed adjacent to the front end side (the left side as viewed in Fig. 3) of the small-diameter portion 6b of the drive shaft 6. Specifically, the arc-shaped inner peripheral portion of the retaining ring 12 is housed in the recessed groove 6d such that the retaining ring 12 is attached to the drive shaft 6.

The retaining ring 12 is provided to constantly contact an end surface of the floating bush 10. The position of the recessed groove 6d and the thickness of the retaining ring 12 are set such that the pressing force of the retaining ring 12 does not interfere with relative rotation of the floating bush 10 on the drive shaft 6. This is because allowing relative rotation of the floating bush 10 on the drive shaft 6 avoids interference with a change in the position of the load on the drive shaft 6.

According to the present embodiment described above, the following features and advantageous effects are provided.

Since the floating bush 10 is clearance-fitted to an outer portion of the drive shaft 6, the clearance formed by such clearance fitting can change the position of the load on the drive shaft 6, and as a result, flaking of the surface of the drive shaft 6 can be prevented. Thus, hardening performed for the surface of the drive shaft 6 can be skipped, leading to cost reduction.

Moreover, the clearance formed by the clearance fitting allows inclination of the drive shaft 6, and as a result, edge loading due to uneven contact with the sub-bearing 8 can be avoided. This can increase the life of the sub-bearing 8.

Further, in the case of applying selective fitting for constant rolling between each needle 8b of the sub-bearing 8 and the outer portion of the drive shaft 6 without providing the floating bush 10, the outer diameter of the drive shaft 6 needs to be strictly adjusted, and therefore, it is hard to control such an outer diameter. On the other hand, in the present embodiment, it is sufficient to apply selective fitting for constant rolling between each needle 8b of the sub-bearing 8 as the needle bearing and the outer portion of the floating bush 10. Since clearance fitting is applied between an inner portion of the floating bush 10 and the outer portion of the drive shaft 6, no strict control of the outer diameter of the drive shaft 6 is required.

When the clearance formed by clearance fitting between the floating bush 10 and the small-diameter portion 6b of the drive shaft 6 is small ($\delta' < \delta$), if the drive shaft 6 inclines with respect to the axis X as illustrated in Fig. 5, the drive shaft 6 contacts the inner peripheral edge portion of one end 10a of the floating bush 10, and also contacts the inner peripheral edge portion of the other end 10b of the floating bush 10. As a result, the floating bush 10 and the drive shaft 6 together incline with respect to the axis X. Consequently, uneven contact between the sub-bearing 8 and the floating bush 10 is caused, leading to edge loading at the sub-bearing 8.

On the other hand, in the present embodiment, when the drive shaft 6 inclines to the maximum extent with respect to the axis X, the clearance $\delta$ is formed between the inner portion of the floating bush 10 and the outer portion of the drive shaft 6 such that the drive shaft 6 contacts the inner peripheral edge portion of one end 10a of the floating bush 10 and does not contact the inner peripheral edge portion of the other end 10b of the floating bush 10 as illustrated in Fig. 4. Thus, the floating bush 10 and the drive shaft 6 do not incline together, and the entirety of the floating bush 10 in the axis-X direction contacts the sub-bearing 8. As a result, edge loading can be reduced.

The retaining ring 12 is attached to the drive shaft 6, and the position of the floating bush 10 in the axis-X direction is determined by the retaining ring 12. Since the retaining ring 12 constantly contacts the end surface of the floating bush 10, fretting due to intermittent contact between the retaining ring 12 and the end surface of the floating bush 10 can be prevented.

The recessed groove 6d for attachment of the retaining ring 12 can be also used as a buffer portion in polishing of the drive shaft 6. That is, as illustrated in Fig. 6, when the small-diameter portion 6b of the drive shaft 6 is polished by a sharpening stone 20, the recessed groove 6d is formed adjacent to the small-diameter portion 6b, and therefore, an end portion 20a of the sharpening stone 20 does not contact the drive shaft 6 even when polishing by the sharpening stone 20 is performed all the way up to the end of the small-diameter portion 6b. Thus, polishing can be, with a high accuracy, performed all the way up to the end portion of the small-diameter portion 6b.

Note that the scroll compressor has been described as a specific example in the present embodiment, but the present invention is not limited to the scroll compressor. For example, the present invention is applicable to other types of compressors such as a compressor including a rotary compression mechanism as a compression mechanism.

{Reference Signs List}

1 scroll compressor (compressor)
2 rear housing
2a opening
3 front housing
5 scroll compression mechanism (compression mechanism)
6 drive shaft
6a large-diameter portion
6b small-diameter portion
6c intermediate-diameter portion
6d recessed groove
7 main bearing
8 sub-bearing
8a outer ring
8b needle
8c holder
9 lip seal (sealing portion)
10 floating bush (cylindrical ring)
12 retaining ring (contact member)
X axis

**Claims**

1. A compressor (1) comprising:

   a drive shaft (6) rotatable about an axis (X);
   a compression mechanism (5) arranged to be driven by the drive shaft (6) to compress a fluid;
   a main bearing (7) configured to rotatably support the drive shaft (6) on a housing (2,3); and
   a sub-bearing (8) rotatably supporting the drive shaft (6) on the housing (2,3) on an end side of the drive shaft (6) with respect to the main bearing (7);
   **characterized in that**
   the sub-bearing (8) is configured as a needle bearing and includes a plurality of needles (8b); and
   a cylindrical ring (10) is provided such that the needles (8b) are rolling at an outer peripheral surface of the cylindrical ring (10), and such that it is clearance-fitted, at an inner peripheral surface of the cylindrical ring (10), to an outer portion of the drive shaft (6) to rotate together with the drive shaft (6).

2. The compressor (1) according to claim 1, wherein a clearance formed by the clearance fitting is set such that when the drive shaft (6) inclines to a maximum extent with respect to the axis (X), the drive shaft (6) contacts an inner peripheral edge portion of one end (10a) of the cylindrical ring (10) and does not contact an inner peripheral edge portion of the other end (10b) of the cylindrical ring (10).

3. The compressor (1) according to claim 1 or 2, further comprising:
a contact member (12) attached to the drive shaft (6) so as to constantly contact an end surface of the cylindrical ring (10) to determine a position of the cylindrical ring (10) in an axial direction.

4. The compressor (1) according to claim 3, wherein the contact member (12) is arranged to press the cylindrical ring (10) to the drive shaft (6) so as not to interfere with relative rotation of the cylindrical ring (10).

5. The compressor (1) according to claim 3 or 4, wherein
the contact member (12) has an arc-shaped inner peripheral portion, and is attached to the drive shaft (6) in such a manner that the inner peripheral portion is housed in a recessed groove (6d) formed in a circumferential direction of the drive shaft (6).

**Patentansprüche**

1. Ein Kompressor (1) umfassend:

eine Antriebswelle (6), die um eine Achse (X) drehbar ist,
einen Verdichtungsmechanismus (5), der so angeordnet ist, dass er von der Antriebswelle (6) angetrieben wird, um ein Fluid zu verdichten,
ein Hauptlager (7), das so konfiguriert ist, dass es die Antriebswelle (6) drehbar an einem Gehäuse (2,3) lagert, und
ein Nebenlager (8), das die Antriebswelle (6) an dem Gehäuse (2,3) auf einer Endseite der Antriebswelle (6) in Bezug auf das Hauptlager (7) drehbar lagert,
**dadurch gekennzeichnet, dass**
das Nebenlager (8) als ein Nadellager konfiguriert ist und eine Vielzahl von Nadeln (8b) enthält, und
ein zylindrischer Ring (10) so vorgesehen ist, dass die Nadeln (8b) an einer äußeren Umfangsfläche des zylindrischen Rings (10) abwälzen, und so, dass er an einer inneren Umfangsfläche des zylindrischen Rings (10) mit Spielpassung an einem äußeren Abschnitt der Antriebswelle (6) befestigt ist, um sich zusammen mit der Antriebswelle (6) zu drehen.

2. Der Kompressor (1) nach Anspruch 1, wobei
ein Spiel, das durch die Spielpassung gebildet ist, so eingestellt ist, dass, wenn die Antriebswelle (6) in Bezug auf die Achse (X) maximal geneigt ist, die Antriebswelle (6) einen inneren Umfangsrandabschnitt eines Endes (10a) des zylindrischen Rings (10) berührt und einen inneren Umfangsrandabschnitt des anderen Endes (10b) des zylindrischen Rings (10) nicht berührt.

3. Der Kompressor (1) nach Anspruch 1 oder 2, weiter umfassend:
ein Kontaktelement (12), das an der Antriebswelle (6) so angebracht ist, dass es ständig eine Endoberfläche des zylindrischen Rings (10) berührt, um eine Position des zylindrischen Rings (10) in axialer Richtung zu bestimmen.

4. Der Kompressor (1) nach Anspruch 3, wobei
das Kontaktelement (12) so angeordnet ist, dass es den zylindrischen Ring (10) zu der Antriebswelle (6) drückt, um die relative Drehung des zylindrischen Rings (10) nicht zu behindern.

5. Der Kompressor (1) nach Anspruch 3 oder 4, wobei
das Kontaktelement (12) einen bogenförmigen Innenumfangsabschnitt aufweist und so an der Antriebswelle (6) angebracht ist, dass der Innenumfangsabschnitt in einer ausgesparten Nut (6d) aufgenommen ist, die in einer Umfangsrichtung der Antriebswelle (6) ausgebildet ist.

**Revendications**

1. Compresseur (1), comprenant :

un arbre (6) d'entraînement pouvant tourner autour d'un axe (X) ;
un mécanisme (5) de compression agencé pour être entraîné par l'arbre (6) d'entraînement, afin de comprimer un fluide ;
un palier (7) principal configuré pour supporter à rotation l'arbre (6) d'entraînement sur un carter (2, 3) ; et
un sous-palier (8) supportant à rotation l'arbre (6) d'entraînement sur le carter (2, 3) d'un côté de bout de l'arbre (6) d'entraînement par rapport au palier (7) principal ;
**caractérisé en ce que**
le sous-palier (8) est configuré sous la forme d'un palier à aiguilles et a une pluralité d'aiguilles (8b) ; et
il est prévu un anneau (10) cylindrique de manière à ce que les aiguilles (8b) roulent sur une surface périphérique extérieure de l'anneau (10) cylindrique, et de manière à ce qu'il soit ajusté avec jeu, à une surface périphérique intérieure de l'anneau (10) cylindrique, à une partie extérieure de l'arbre (6) d'entraînement pour tourner ensemble avec l'arbre (6) d'entraînement.

2. Compresseur (1) suivant la revendication 1, dans lequel un jeu formé par l'adaptation avec jeu est réglé de manière à ce que, lorsque l'arbre (6) d'entraînement s'incline à un degré maximum par rapport à l'axe (X), l'arbre (6) d'entraînement entre en contact avec une partie de bord périphérique intérieure d'une extrémité (10a) de l'anneau (10) cylindrique et n'entre pas en contact avec une partie de bord périphérique intérieure de l'autre extrémité (10b) de l'anneau (10) cylindrique.

3. Compresseur (1) suivant la revendication 1 ou 2, comprenant, en outre :
un élément (12) de contact adjoint à l'arbre (6) d'entraînement de manière à être constamment en contact avec une surface d'extrémité de l'anneau (10) cylindrique, afin de déterminer une position de l'anneau (10) cylindrique dans une direction axiale.

4. Compresseur (1) suivant la revendication 3, dans lequel
l'élément (12) de contact est agencé pour presser l'anneau (10) cylindrique vers l'arbre (6) d'entraînement, de manière à ne pas interférer avec une rotation relative de l'anneau (10) cylindrique.

5. Compresseur (1) suivant la revendication 3 ou 4, dans lequel
l'élément (12) de contact a une partie périphérique intérieure arquée et est adjoint à l'arbre (6) d'entraînement de manière à ce que la partie périphérique intérieure soit logée dans une rainure (6d) en retrait, formée dans une direction circonférentielle de l'arbre (6) d'entraînement.

FIG. 1

EP 3 081 742 B1

# FIG. 2

# FIG. 3

# FIG. 4

# FIG. 5

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010236489 A
- JP 2003232288 A
- JP S60183201 A
- US 20100080722 A1